**Europäisches Patentamt**

**European Patent Office**

**Office européen des brevets**

(11) Veröffentlichungsnummer: **0 149 973**
**A2**

## (12) EUROPÄISCHE PATENTANMELDUNG

(21) Anmeldenummer: **84810583.9**

(22) Anmeldetag: **29.11.84**

(51) Int. Cl.⁴: **B 65 G 1/02**
**A 47 F 5/00**

(30) Priorität: **22.12.83 CH 6846/83**

(43) Veröffentlichungstag der Anmeldung:
**31.07.85 Patentblatt 85/31**

(84) Benannte Vertragsstaaten:
**AT BE CH DE FR GB IT LI LU NL SE**

(71) Anmelder: **Maurer, Alfred**
**Dreilindenhöhe 13**
**CH-6006 Luzern(CH)**

(72) Erfinder: **Maurer, Alfred**
**Dreilindenhöhe 13**
**CH-6006 Luzern(CH)**

(74) Vertreter: **Bosshard, Ernst**
**Schulhausstrasse 12**
**CH-8002 Zürich(CH)**

(54) **Regallagereinrichtung zur Aufnahme von Paletten.**

(57) Die Regallagereinrichtung enthält Vertikalstützen (1) und Horizontalträger (2), welche je als Rohre mit kreisrundem Querschnitt ausgebildet und flüssigkeitsgefüllt sind. Quer zu den Horizontalträgern (2) befinden sich im Abstand voneinander Palettenträgerrohre (8) an denen Schalen (10) - die im Querschnitt halbkreisförmig sind - angeschweisst sind. Diese Schalen (10) werden auf die Horizontalträger (2) aufgesetzt. Die Palettenträgerrohre (8) werden mit den Vertikalstützen (1) und/oder an die Horizontalträger (2) so verbunden, dass in ihrem Innern Flüssigkeit zirkulieren kann. Im Brandfall werden die Rohre durch das in diesen durchfliessende Wasser gekühlt. Durch die Möglichkeit der Vorfabrizierung und das Aufstecken der Palettenträgerrohre (8) auf die Horizontalträger (2) wird die Montage stark vereinfacht.

*Fig. 1*

Regallagereinrichtung zur Aufnahme von Paletten

Die Erfindung bezieht sich auf eine Regallagereinrichtung zur Aufnahme von Paletten, mit wassergefüllten Vertikalstützen und Horizontalträgern, wobei Mittel vorhanden sind, welche im Brandfall eine Wasserzirkulation in den tragenden Organen bewirken.

Aus der CH-PS 571 987 ist bereits eine Regallagereinrichtung bekannt, bei welcher die Träger als wassergefüllte Hohlprofilschienen ausgebildet sind. Im Brandfall bewirkt eine durch Sprinkler od.dgl. in Gang gesetzte Wasserzirkulation im Innern der Hohlprofilschienen eine Kühlung derselben, so dass bei einem Brand deren Tragfähigkeit während einer gegenüber konventionellen Regalen wesentlich längeren Zeit erhalten bleibt, die üblicherweise ausreicht, bis die Löscharbeiten wirksam werden. Die wasserdichte Verbindung der tragenden Organe bedingt allerdings umfangreiche Schweissarbeiten am Aufstellort des Regallagers.

Mit der Erfindung soll die Aufgabe gelöst werden, eine Regallagereinrichtung der eingangs genannten Art in der Weise weiter auszubilden, dass eine weitgehende Vorfabrikatikon und einfache Montage
möglich ist und - zur Erhöhung der Feuerwiderstandszeit - die Palettenträger sowie deren Auflagestellen auf den Horizontalträgern kühlbar
sind, unter Verwendung handelsüblicher, preisgünstiger Rohre.

Die Erfindung mit der diese Aufgabe gelöst wird,
ist dadurch gekennzeichnet, dass quer zu den
Horizontalträgern verlaufende kreisrund ausgebildete Palettenträgerrohre auf die als Rohre
ausgebildeten Horizontalträger aufsteckbar ausgeführt sind, wobei an den Palettenträgerrohren
Schalen oder U-Profile starr befestigt sind,
welche die Horizontalträger oben übergreifen
und die Palettenträgerrohre mit den tragenden
Organen flüssigkeitsverbunden sind.

Auf diese Weise gelingt es, die aus Vertikalstützen und Horizontalträgern bestehenden Rahmenteile seriemässig vorzufabrizieren und ebenfalls
die getrennt anlieferbaren Palettenträgerrohre,
welche bei der Montage lediglich aufgesteckt
und angeschlossen werden müssen, so dass die
Montagezeit an Ort wesentlich verringert wird.
Ausserdem lassen sich neben den Palettenträgerrohren auch die Auflagestellen auf den Horizontalträgern durch Wasserdurchfluss kühlen. Dadurch
wird eine weitere Erhöhung der Feuerwiderstandszeit einer solchen Regallagereinrichtung erreicht.
Da zudem alle tragenden Organe als Rohre mit
kreisrundem Querschnitt ausgeführt sind, kann
die Regallagereinrichtung direkt und ständig

0149973

- 3 -

an das einen üblichen Druck aufweisende Orts-
Wassernetz angeschlossen werden, ohne dass die
wassergefüllten Bauteile über die statischen
Erfordernisse hinaus stärker dimensioniert werden
müssen, um ein Ausbauchen zu vermeiden.

In der Zeichnung sind Ausführungsbeispiele des
Erfindungsgegenstandes dargestellt. Es zeigen:

Fig. 1    eine Vorderansicht einer Regallagereinrichtung

Fig. 2    eine Ansicht der Regallagereinrichtung
          in Richtung des Pfeiles A in Fig. 1

Fig. 3    ein Detail, welches in Fig. 2 durch einen
          Kreis markiert ist

Fig. 4    eine Ansicht eines mit einer Halbschale
          verbundenen Palettenträgerrohres

Fig. 6    eine zu Fig. 4 analoge Ansicht, jedoch
          mit einem U-Profil

Fig. 7    einen Schnitt nach der Linie VII-VII

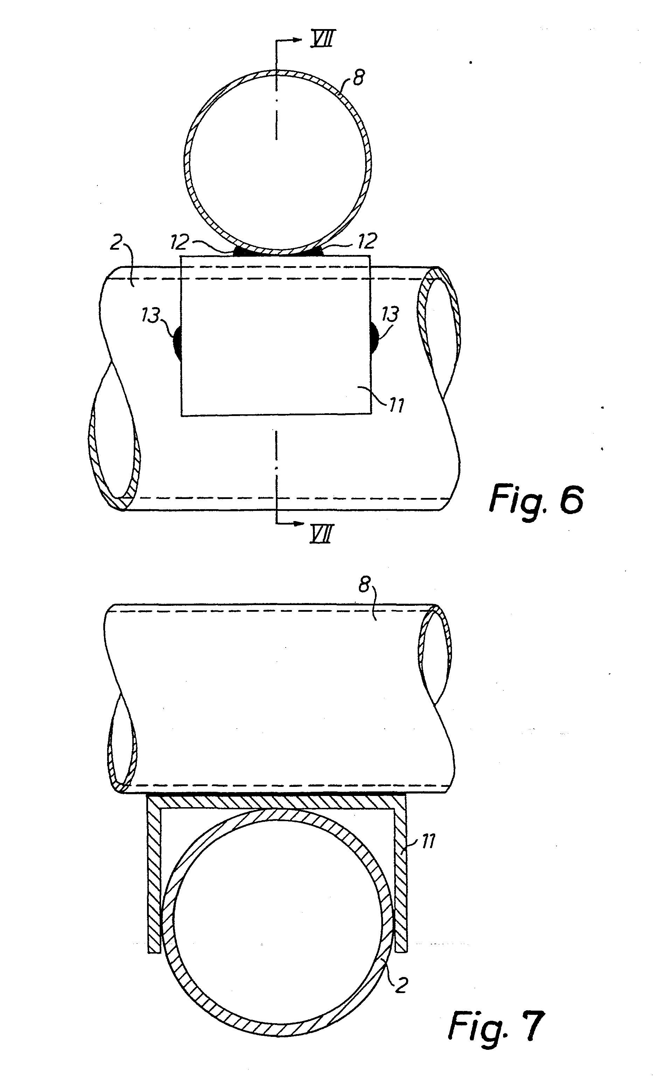

          in Fig. 6

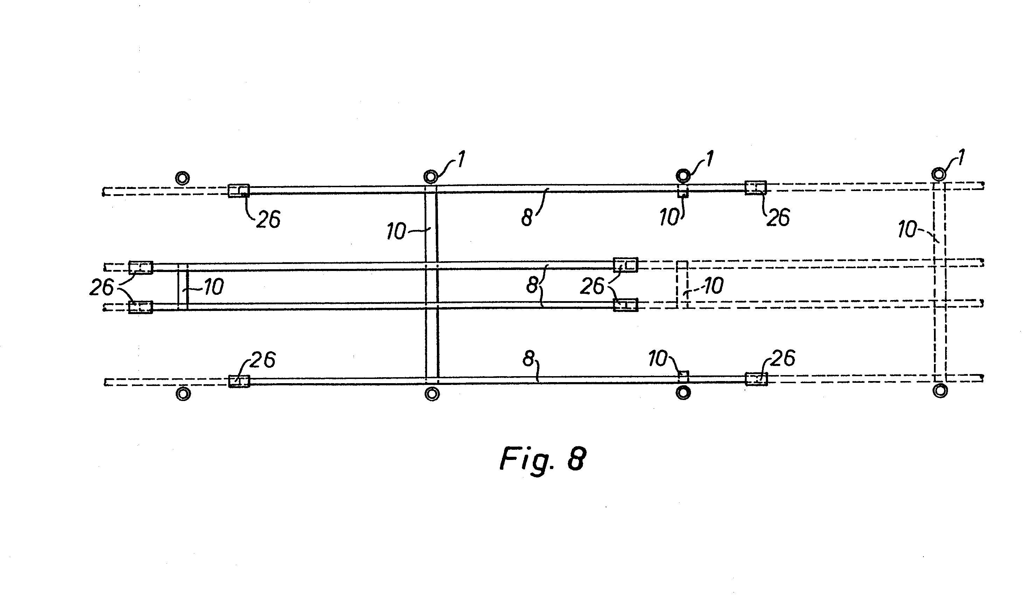

Fig. 8    eine Teil-Draufsicht auf Palettenträgerrohre in schematischer Darstellung.

Die Regallagereinrichtung wird vorzugsweise als
Hochregallager ausgebildet und dient beispielsweise zur Aufnahme handelsüblicher Paletten.
Mit den Verstärkerstützen 1 sind übereinander

0149973

- 4 -

angeordnete Horizontalträger 2 starr verbunden, wobei die Verbindung dieser tragenden Organe durch Schweissnähte erfolgt. Sowohl die Vertikalstützen 1 als auch die Horizontalträger 2 sind als Rohre je mit kreisrundem Querschnitt ausgebildet und werden entsprechend den statischen Notwendigkeiten dimensioniert. Je zwei Vertikalstützen 1 bilden mit mehreren im Abstand übereinander liegenden Horizontalträgern 2 einen als vorfabrizierbaren Bausatz ausgebildeten Rahmen, bei dem zwischen den Vertikalstützen 1 und den Horizontalträgern 2 je eine Durchflussverbindung besteht. Die hohlen Vertikalstützen 1 sind oben je durch eine Platte 23 dicht abgeschlossen.

Diese Platten 23 sind mit einem Horizontalträger – vorzugsweise einem Doppel-T-Träger 17 – durch Schrauben 21 verbunden. Der Träger 17 ist üblicherweise ein Dachträger. Derartige Rahmen lassen sich seriemässig vorfabrizieren und vor Gebrauch raumsparend stapeln und nehmen nur ein geringes Transport- und Verschiffungsvolumen ein. Die Vertikalstützen 1 liegen unten je mit einer Fussplatte 4 auf einer im Boden 5 verankerten Grundplatte auf. Nahe am oberen Ende des Rahmens ist ein sich über mehrere Gestellreihen erstreckendes Horizontalrohr 6 vorhanden, das mit den Rahmen je durch mindestens eine Verbindungsleitung 25 durchflussverbunden ist. Dieses Horizontalrohr 6 verläuft seitlich neben den Vertikalstützen 1.

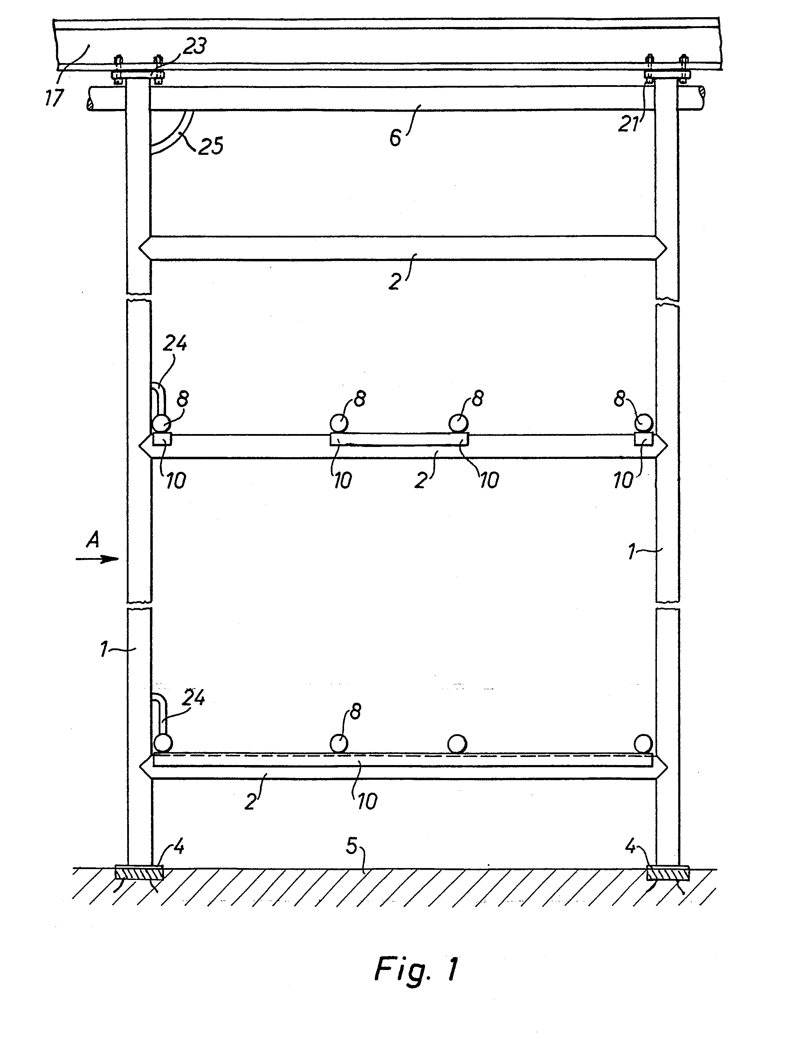

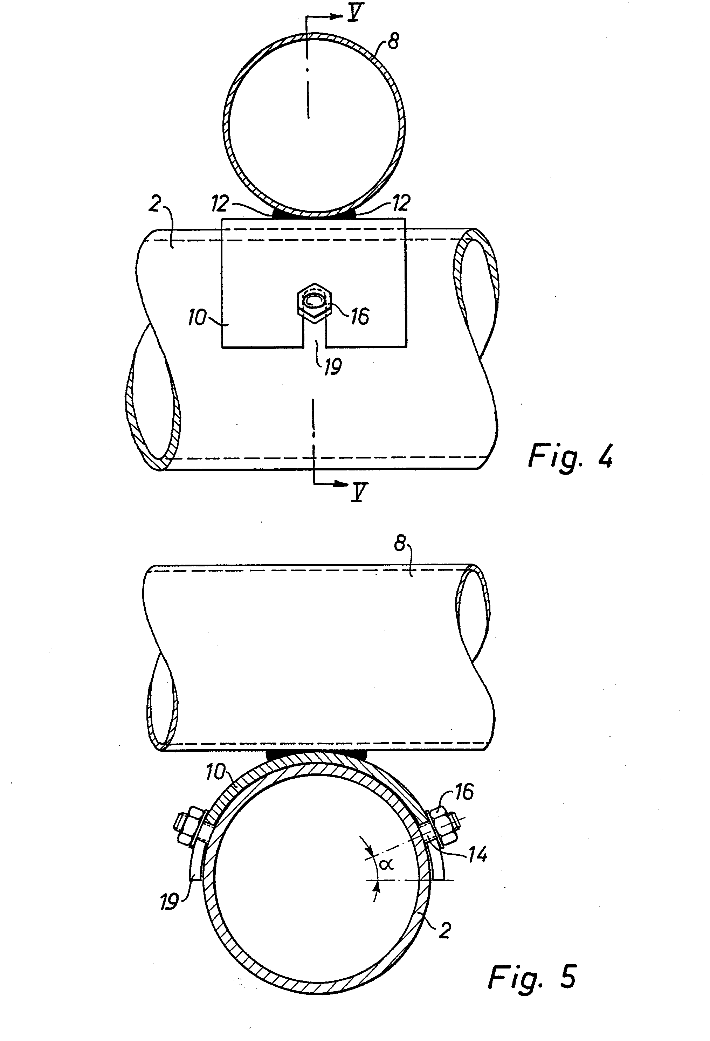

Auf den Horizontalträgern 2 liegen im Abstand voneinander Palettenträgerrohre 8 mit kreisrundem Querschnitt auf. Diese Palettenträgerrohre 8 erstrecken sich in Horizontalrichtung quer zu den Horizontalträgern 2. An den Auflagestellen befinden sich gemäss Fig. 4 und 5 Halbschalen 10 die mit den Palettenträgerrohren 8 starr verbunden sind. Die im Querschnitt etwa halbkreisförmigen Schalen 10 haben einen Innenradius welcher praktisch dem Aussenradius der Horizontalträger 2 entspricht. Solche Schalen 10 können entweder als relativ kurze Stücke ausgebildet sein, mit einer Länge die etwa dem Durchmesser der Rohre entspricht oder aber diese Schalen 10 können sich über eine grössere Länge erstrecken, sodass mit ihnen mehrere nebeneinanderliegende Palettenträgerrohre 8 verbunden werden können, wie dies in Fig. 1 an den beiden untersten Horizontalträgern 2 dargestellt ist. Die Schalen 10 sind durch Schweissnähte 12 je mit dem Palettenträgerohr 8 starr verbunden. Zu Sicherung dieser Schalen gegenüber einer relativen Verschiebung kann auf den Horizontalträgern 2 mindestens ein Gewindebolzen 14 am Horizontalträger 2 angeschweisst werden, auf den eine Gewindemutter 16 aufgesetzt ist. Der Gewindebolzen 14 durchdringt einen randoffenen Schlitz 18 der Schale 10. Vorzugsweise sind - gemäss Fi. 5 - zwei auf gegenüberliegenden Seiten des Horizontalträgers 2 angeordnete radial abstehende Gewindebolzen 14 vorhanden, die zur Horizontalen je einen Winkel $\alpha$ von etwa 25° bilden.

An Stelle einer Verschraubung der Horizontalträger 2 mit den Schalen 10 könnten diese Teile auch miteinander verschweisst, verlötet oder verklebt werden.

- 6 -

In den Fig. 6 und 7 ist eine Ausführungsvariante dargestellt, bei welcher an Stelle von Schalen 10 U-Profile 11 vorhanden sind. Die Parallelschenkel dieser U-Profile 11 sind länger als der Radius des Horizontalträgers 2. Die Abmessungen sind so gewählt, dass die U-Profile 11 einen metallischen Kontakt mit den Horizontalträgern 2 haben. Die U-Profile können - analog zu den Schalen 10 - mit einem oder mehreren Palettenträgerrohren 8 starr verbunden sein. Zur Sicherung gegen axiale Bewegungen werden zwischen dem U-Profil 11 und dem Horizontalträger 2 Schweissstellen 13 oder Lötstellen angebracht. Diese Teile könnten auch miteinander verklebt werden.

Durch eine derartige Ausbildung der Befestigungsstelle zwischen Horizontalträgern 2 und Palettenträgerrohre 8 gelingt es einerseits eine weitgehende Vorfabrikation zu ermöglichen und anderseits die Feuerwiderstandszeit weiter zu erhöhen, da diese Verbindungsstellen durch den metallischen Kontakt der Schalen 10 bzw. der U-Profile 11 an den Horizontalträgerrohren 2 ebenfalls gekühlt werden, wenn ein Wasserdurchfluss stattfindet. Die aus Vertikalstützen 1 und Horizontalträgern 2 bestehenden Rahmen lassen sich somit am Aufstellort der Regallagereinrichtung durch einfaches Aufsetzen der Schalen 10, bzw. der U-Profile 11 mit den Palettenträgerrohren 8 zu Gestellen verbinden, worauf an Ort die Schweisspunkte 13 angebracht werden.

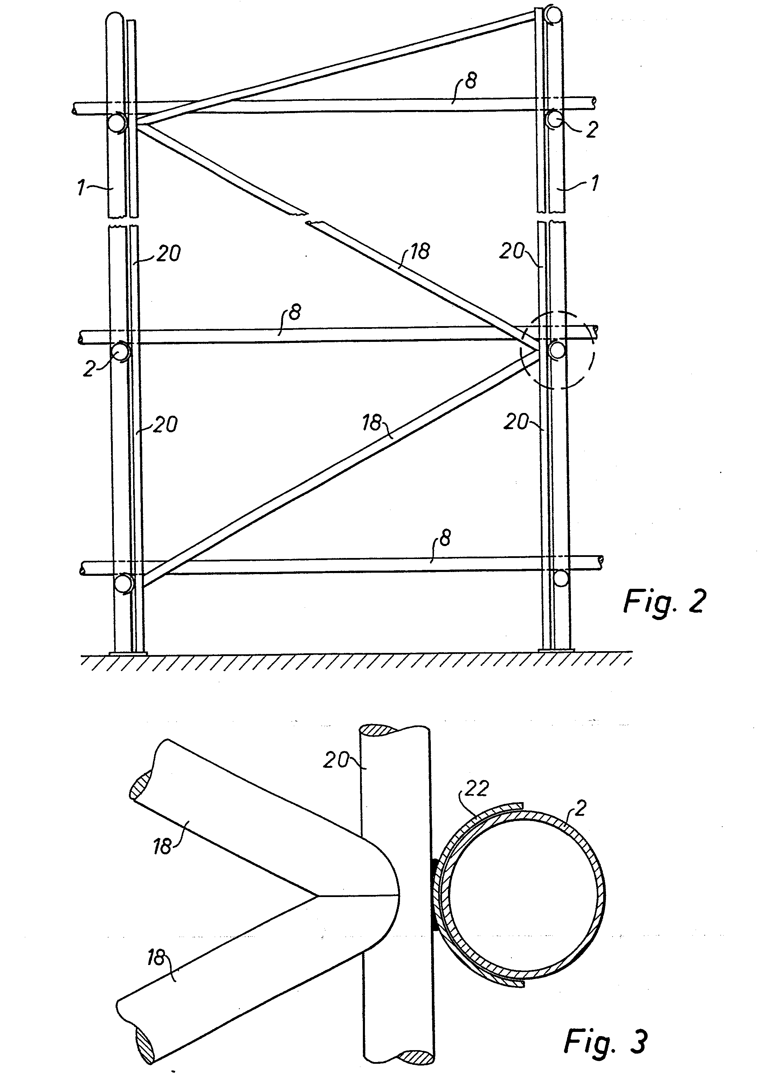

Zur seitlichen Versteifung des Gestelles sind gemäss den Fig. 2 und 3 zickzackförmig verlaufende Versteifungsstreben 18 vorhanden, welche an beiden Enden je mit einem Vertikalrohr 20 verbunden sind. Die Vertikalrohre 20 sind auf der den Versteifungsstreben 18 abgewandten Seite ebenfalls mit einer Schale 22 oder einem U-Profil starr verbunden, welche gegen die jeweiligen Horizontalträger 2 anliegen und zwar in einer um 90° gedrehten Position gegenüber den Schalen 10, welche an den Palettenträgerrohren 8 befestigt sind. Diese Vertikalrohre 20 und die Versteifungsstreben 18 sind untereinander flüssigkeitsverbunden und an das Wasserzirkulationssystem angeschlossen. Die Schalen 22 bzw. die U-Profile können auch hier mit den Horizontalträgern 2 verschraubt, verschweisst oder verklebt werden.

Die Flüssigkeitsverbindung zwischen den Palettenträgerrohren 8 und den Vertikalstützen 1 und/oder den Horizontalträgern 2 erfolgt vorzugsweise durch eine Rohrverbindung 24, die zur Aufnahme allfälliger Wärmedehnungen flexibel ausgebildet ist. Die Palettenträgerrohre 8 sind an ihren Enden untereinander flüssigkeitsverbunden, sodass sie im Brandfall durch zirkulierendes Wasser ebenfalls gekühlt werden. Der Anschluss an ein Ortswassernetz erfolgt vorzugsweise unten an einer Vertikalstütze 1.

Eine derartige Regallagereinrichtung und damit das ganze Gebäude kann durch Erwärmung oder Kühlung der in den Rohren zirkulierenden Flüssigkeit beheizt oder gekühlt werden. Die Zirkulation des Wassers wird durch eine Pumpe bewirkt.

Gemäss Fig. 8 lassen sich mehrere horizontale Palettenträgerrohre 8 mit Schalen 10 zu einem vorfabrizierten Bausatz verbinden, der in Fig. 6 in vollen Linien gezeichnet ist. Gleiche, in unterbrochenen Linien teilweise dargestellte Bausätze lassen sich beidseitig anfügen. Bei vier gleich langen, in der gleichen Horizontalebene liegenden Palettenträgerrohren 8 jeweils eines Bausatzes ist das mittlere Rohrpaar gegenüber den beiden äussern Rohren in Längsrichtung versetzt angeordnet. Im mittleren Bereich sind alle vier Palettenträgerrohre 8 mit einer einzigen, durchgehenden Schale 10 verbunden. Zusätzlich ist auf das mittlere Rohrpaar am einen Ende eine sich über beide Rohre erstreckende Schale 10 aufgesetzt. Am entgegengesetzten Ende befinden sich an den äussern Rohren einzelne, kurze Schalen 10. Derartige Bausätze, die sich seriemässig vorbereiten lassen, können leicht aneinandergefügt werden, wobei die flüssigkeitsdichte Verbindung je durch eine über beide Rohrenden schiebbare Verbindungsmuffe 26 erfolgt. Diese Verbindungsmuffen 26 werden mit den Rohren 8 verschweisst, verlötet oder verklebt. Ausser den in Fig. 8 dargestellten vier Palettenträgerrohren 8 könnte auch eine andere Anzahl derselben zu einem vorfabrizierten Bausatz zusammengefügt werden.

Da die Umwälzpumpe des Wassers in den Rohren 1, 2, 8, 18 bei einer Beheizung oder Kühlung in Zirkulation gebracht wird, ist eine Kontrolle der Temperatur im Rücklauf möglich. Wenn diese in einem Brandfall einen vorbestimmten Wert übersteigt, kann das Rücklaufwasser abgelassen und über den Vorlauf gleichzeitig kaltes Frischwasser eingespeist werden, wodurch sich eine Kühlung der Rohre ergibt.

Die wassergefüllten Rohre stehen unter ständigem Druck, beispielsweise unter dem Druck des öffentlichen Wassernetzes oder eines hochliegenden Vorratsbehälters, so dass sofort ein Wassernachfluss erfolgt, wenn ein oder mehrere an den Rohren angeschlossene, auf erhöhte Temperatur ansprechende Sprinkler in Betrieb gesetzt werden.

- 1 -

Patentansprüche

1. Regallagereinrichtung zur Aufnahme von Paletten, mit wassergefüllten Vertikalstützen und Horizontalträgern, wobei Mittel vorhanden sind, welche im Brandfall eine Wasserzirkulation in den tragenden Organen bewirken, dadurch gekennzeichnet, dass quer zu den Horizontalträgern (2) verlaufende kreisrund ausgebildete Palettenträgerrohre (8) auf die als Rohre ausgebildeten Horizontalträger (2) aufsteckbar ausgeführt sind, wobei an den Palettenträgerrohren (8) Schalen (10) oder U-Profile (11) starr befestigt sind, welche die Horizontalträger (2) oben übergreifen und die Palettenträgerrohre (8) mit den tragenden Organen flüssigkeitsverbunden sind.

2. Regallagereinrichtung nach Patentanspruch 1, dadurch gekennzeichnet, dass die Schalen (10) oder U-Profile (11) so lang sind, dass sie sich über mehrere Palettenträgerrohre (8) erstrecken.

3. Regallagereinrichtung nach dem Patentanspruch 1, dadurch gekennzeichnet, dass die starre Verbindung zwischen Schalen (10) bzw. U-Profilen (11) und Horizontalträgern (2) durch Schrauben (14, 16), Schweissstellen (13) oder Klebstellen erfolgt.

4. Regallagereinrichtung nach einem der Patentansprüche 1 - 3, mit Versteifungsstreben, dadurch gekennzeichnet, dass die zickzackförmig verlaufenden Versteifungsstreben (18) als Rohre ausgebildet sind, die mittels Schalen (22) oder U-Profilen (11) gegen die Horizontalträger (2) anliegen
und mit den tragenden Organen flüssigkeitsverbunden sind.

5. Regallagereinrichtung nach mindestens einem
der Patentansprüche 1 - 4, dadurch gekennzeichnet,
dass je mehrere horizontal auf gleicher Ebene
liegende Palettenträgerrohre (8) samt zugehörigen
Schalen (10) oder U-Profilen (11) zu einem vorfabrizierten Bausatz zusammengefügt sind, bei
dem Verbindungsstellen zu einem benachbarten
Bausatz in Axialrichtung versetzt angeordnet
sind (Fig. 8).

6. Regallagereinrichtung nach mindestens einem
der Patentansprüche 1 - 5, dadurch gekennzeichnet,
dass je zwei Vertikalstützen (1) samt zugehörigen
Horizontalträgern (2) eine vorfabrizierte Baueinheit bilden.

7. Verfahren zum Betrieb einer wassergefüllten
Regallagereinrichtung, insbesondere nach Patentanspruch 1, dadurch gekennzeichnet, dass die
Rücklauftemperatur der wassergefüllten Rohre
überwacht und bei Ueberschreitung einer vorbestimmten Temperatur des Rücklaufwassers dieses
abgelassen und gleichzeitig Frischwasser eingespeist wird.

*Fig. 1*

0149973

*Fig. 2*

*Fig. 3*

0149973

Fig. 4

Fig. 5

0149973

Fig. 6

Fig. 7

*Fig. 8*